# EUROPEAN PATENT APPLICATION

(11) **EP 1 217 160 A2**
(43) Date of publication of application: **26.06.2002**
(21) Application number: 01129150.7
(22) Date of filing: 08.12.2001
(51) Int. Cl.: E05F 15/18, H02K 41/02

(54) **Door suspension system**

(30) Priority: 22.12.2000 EP 00811235
(71) Applicant: INVENTIO AG, CH-6052 Hergiswil (CH)
(72) Inventor: Rennetaud, Jean-Marie, Chester, NJ 07930 (US); Zhou, Tian, 6014 Littau (CH)

(57) **Abstract**

The door suspension system comprises a rail support (**1**) attachable to a crosspiece (**2**) of a door and having a part shaped as a rigid substantially flat plate (**3**) which supports a rail (**4**). A pair of brackets (**8**) comprising each a connector (**9**) are attached to supporting means (**10**) which have an opening (**11**), in which the rail (**4**) is partially introduced. Said connectors (**9**) have a substantially C-profile embracing the flat plate (**3**) and the rail (**4**). A support piece (**12**) is attached to the connectors (**9**) and provided with connection means (**13**) for the suspension of a door (**14**) of a lift. A magnetic way (**16**) is attached to the plate (**3**) and an elongated primary (**15**) of a linear motor is attached to the strip (**12**) in such a manner that the attraction force between the magnetic way (**16**) and the primary (**15**) cancels at least partially the weight of the door (**14**). The door suspension system further comprises a bearing of substantially cylindrical shape with an axial recess. Said bearing is mounted in said opening (**11**) of the supporting means (**10**) and said rail (**4**) is introduced in said recess.

## Description

The present invention relates to a door suspension system as defined in claim **1.**

The European patent application **No. 0 841 286 A1** discloses an elevator car door suspension system for opening and closing elevator car doors including a linear induction motor having a pair of movable motor primaries attached to a respective door hanger of each door and a stationary motor secondary attached to a header bracket which is secured to the elevator car, and wherein said motor secondary comprises a substantially flat plate which is vertically disposed and is preferably made of a conductive metal as copper. In this system, in which the door panels are guided by separate rails, a pair of moving flexible ropes and wheels are needed to keep both panels be moving synchronously.

A problem with an elevator car door suspension system having moving flexible ropes and wheels is that it is very expensive. Another drawback is due to stability and maintenance problems.

Therefore, the object of the present invention is to provide an improved door suspension system.

The door suspension system of the invention is characterized by what is said in claim **1**. Other embodiments of the invention are characterized by the features presented in the other claims.

One of the advantages of the door suspension system according to the invention, is that it can be easily and inexpensively manufactured and easily and quickly installed.

Other characteristics and advantages of the present invention will become apparent on reading the description made hereafter with reference to the accompanying drawings, given solely by way of example, wherein:
**FIG. 1** is a schematic sectional view of a door suspension system for an elevator car according to a first embodiment of the invention;
**FIG. 2** is a front view of the embodiment of **FIG. 1;**
**FIG. 3** is a perspective view of a part of said system;
**FIG. 4** is a simplified perspective view of a bearing located between a rail and a bracket;
**FIG. 5** is an elevational view of a panel door with an upper hinge joint and a lower guiding joint;
**FIG. 6** is a schematic illustration of a structure of a magnetic track of a second embodiment of the invention;
**FIG. 7** is a schematic illustration of a primary of a linear motor of the second embodiment of the invention;
**FIG. 8** is a schematic illustration of a structure of a magnetic track of a third embodiment of the invention; and
**FIG. 9** is a schematic illustration of a primary of a linear motor of the third embodiment of the invention.

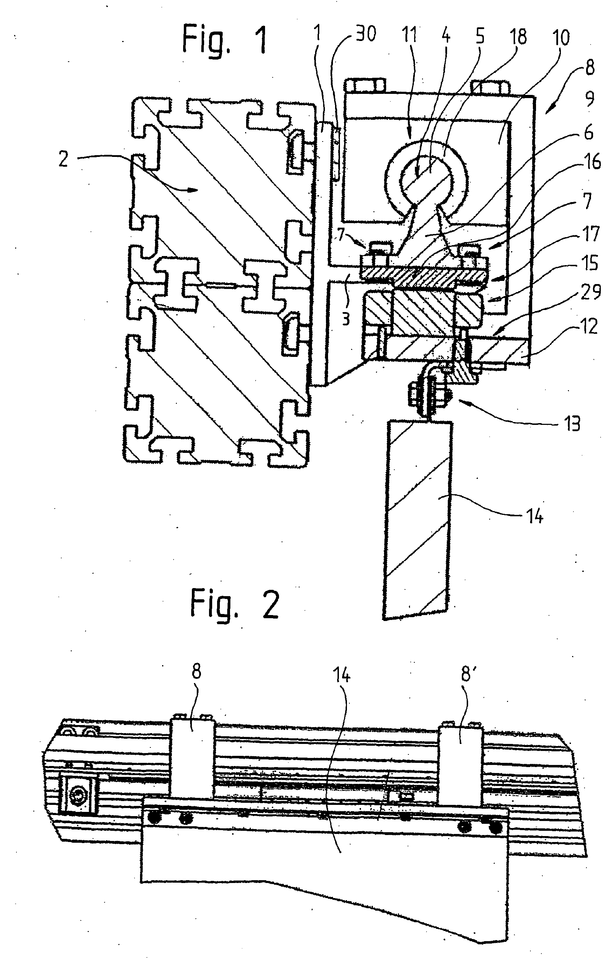

The door suspension system according to **FIG. 1** comprises a rail support **1** attached to a crosspiece **2** of a door frame and disposed above the doorway or entrance portal. The system may be applied to doors, windows, opening portions as doorways of industrial buildings, houses, elevator cars, vehicles and the like. Preferably, the rail support **1** has a T-or L-profile. In the position of **FIG. 1** the T-profile is turned anticlockwise at an angle of **90°** degrees. The horizontal part of the rail support **1** is a rigid substantially flat plate **3** which supports a linear rail **4,** e.g. of a commercially available type, extending at least approximately the length of the door or having approximately the same length as the required door travel. The rail **4** comprises a substantially cylindrical head body **5** and a web **6** with extensions **7** attached to the plate **3.** An example of a linear rail is the Thomson rail system currently used in certain industrial linear motion applications. The door suspension system includes a bracket **8,** comprising a connector **9** joined to a support block **10** having a recess or opening **11,** in which the cylindrical body **5** with a part of the web **6** is introduced. The connector **9** has a substantially C-profile embracing the flat plate **3** with the linear rail **4.** Attached to the outer lower surface of the bottom of connector **9** there is a support strip **12** with connection means **13** from which a door or door panel **14** is suspended as seen in **FIG. 2.** Said connection means preferably include screws or other types of fastener.

Optional the rail support **1** is connected with the crosspiece **2** with connecting means **30,** for instance a screw, a bolt or a nut. Between the connecting means **30** and the support block **10** there is a gap, so that the support block **10** can move freely.

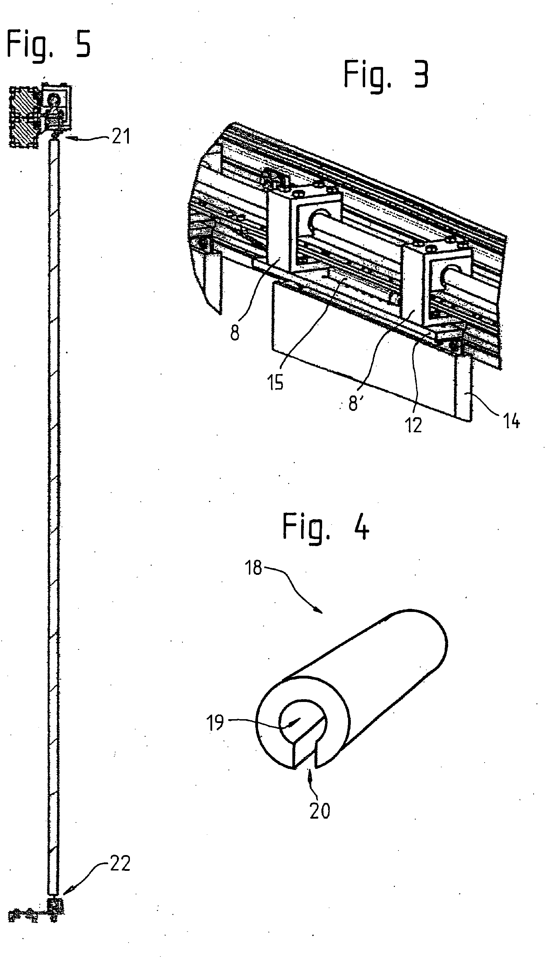

As shown in **FIG. 3** the bracket **8** is attached to an end area of the strip **12,** and the system includes a second bracket **8' (FIG. 2)** attached to the other end area of said strip **12.** In the space between the brackets **8** and **8'** it is placed an elongated primary **15** (**FIG. 1**) of a linear motor, which preferably is a permanent magnet flat linear synchronous motor (**PM-FLSM**). Under the rail or in the flat plate **3** (**FIG. 1**) a magnetic way **16** is mounted which has at least approximately the same length as the required door travel. Such magnetic way **16** may be a magnetic track using magnets, which may be rare earth permanent magnets, such as neodymium-iron-boron (**NdFeB**), cobalt, samarium or cheap hard permanent ferrite magnets disposed with alternating magnetic polarities. According to **FIG. 1** the flat plate **3** has recesses **17** for the location of the magnet assemblies of the magnetic way **16.**

The brackets **8** and **8'** comprise each also a bearing or a bushing **18,** like a linear plain bushing or a linear ball bushing, located in the air gap of the support block **10** between the body **5** and the inner border of the recess **11.** As seen in **FIG. 4** the bushing **18** may be a substantially cylindrical ring-shaped body with a hole **19** for the body **5** and a longitudinal opening **20** for the web **6.** Preferably, the bushing **18** is made from a sliding synthetic material, for example Igus with IglidurJ plastic material or Thomson Fluoronyliner, or a linear ball bushing, for example of the Thomson SuperSmart type. When the motor is active, the bushings **18** slide along the body **5.**

**FIG. 5** illustrates a door panel with an upper hinge joint **21** and a lower guiding joint **22.** Since, as seen in **FIG. 3,** the linear motor primary **15** is attached to the door or door panel **14** via the brackets **8** and **8',** both will be moved together.

The linear motor is disposed in such a way that the attraction force between the magnetic way **16** and the primary **15** cancels at least partially the weight of the door or door panel. This reduces considerably the radial force applied to the bearings or bushings **18** as well as the overall friction in the system and the maximum required force of the motor. This semi-active magnetic suspension allows the door to open faster and noise-less, the motor and the inverter to be smaller in size and the life of the linear bearings to increase substantially due to the load reduction.

Due to the relatively high attraction between the magnetic way **16** and the primary **15** it is convenient to use a very rigid guiding system so that no deflection and change in the air gap dimension can occur. This requirement is fulfilled by the linear rail system and the high stiffness of the brackets **8** and **8'.** In order to accelerate the motion of the door, the primary current must be increased, which in turn increases the attraction force in the air gap, another reason why the rigidity of the system must be high.

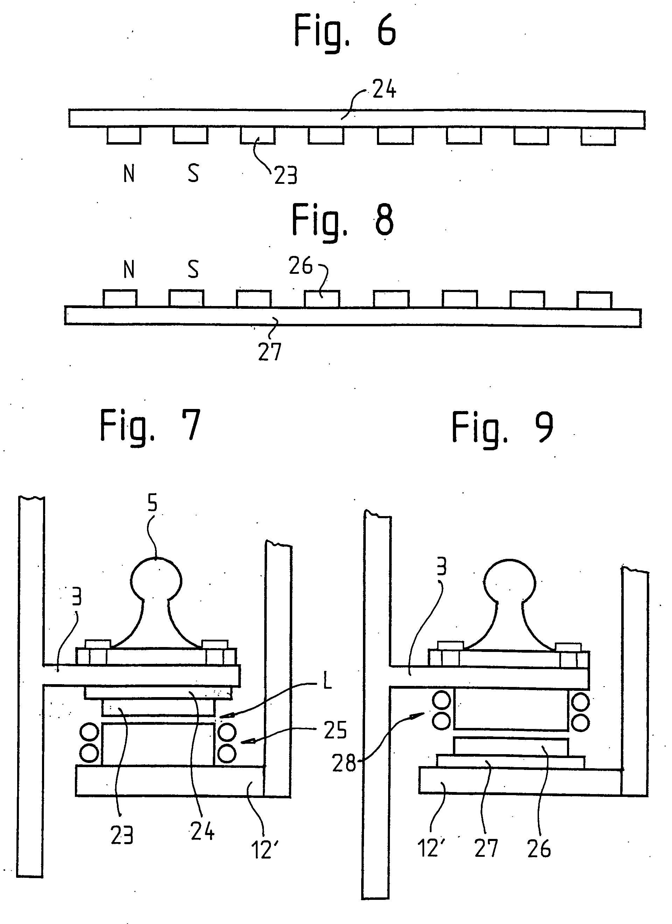

Referring now to **FIG. 6** another embodiment of a magnetic way is shown, in which the flat plate **3** is not provided with a recess for each magnet system, but the magnets **23** are attached to a strip or back iron **24** which in turn is attached under the flat plate **3** as seen in **FIG. 7,** wherein the primary **25** is located over a strip **12'. FIGS. 8** and **9** show still another embodiment of the invention which is similar to the embodiment of **FIG. 7** in that there are magnets **26** attached to a separate strip or back iron **27,** but different from the embodiment of **FIGS. 6** and **7** in that the strip **27** is attached over the support strip **12'.** Accordingly, the primary **28** may be secured to the flat plate **3** under the same.

Other advantages of the system according to the present invention are that a high reliability can be achieved due to the great reduction in the number of parts in comparison with the prior art systems and the use of nearly maintenance-free components; also the volume of the motor and a suitable inverter can be reduced; extra heat generated in the primary can be avoided; no extra bearings are needed to keep the motor air gap constant, avoiding so stability and maintenance problems; and additional ropes and wheels are not needed.

The magnets **23** or **26** are disposed with alternating polarity on the surface of the strip **24** or **27,** respectively, which may be a back iron with segments (not shown) intermediate to inset-mounted permanent magnets. The width of the intermediate segments may be smaller than that of the permanent magnets. Preferably, the back irons **24** and **27** with or without segments are formed from a soft magnetic material such as mild steel, preferably having a relative permeability µᵣ >> **1.** Accordingly, each sequence of magnetic elements **23** or **26** comprises a flat permanent magnet with the N polarity above, an optional intermediate magnetic element, a flat permanent magnet with the S polarity above and an optional intermediate magnetic element. The intermediate magnetic elements may be flat elements of mild iron or steel, plates of ferrite, preferably but not exclusively soft ferrite. The magnets **23, 26** and/or other optional intermediate elements may be glued to the back iron. The primary and the magnetic way are separated by an air gap L, e.g. of **1** to **2.5** mm. The air gap L can be adjusted by varying the thickness of suitable shims **29.** The position control may comprise sensors according to the prior art or any other standard linear positioning devices. Note that there is a direct relationship between the door panel mass, the air gap L, the attraction force, and the required tractive force.

Although an open linear guide is disclosed, a closed linear guide or block **10** is also possible for this door suspension system. In a simplified embodiment of the invention without motor, the primary may be replaced by a simple back-iron. If the guide means **10, 10'** are made from a sliding synthetic material, for example said Igus with IglidurJ plastic material, said bearings **18** may be avoided, and in this case the diameter of the opening **11** should be smaller, specifically, it must fit the rail or other equivalent element **4.** Generally speaking, said guide means may include or not said bearing **18.**

It is an advantage of the present invention, that the use of a PM synchronous motor combined with a hall effect sensor achieves a very precise absolute positionning of the door panels as well as a re-initialization if needed.

### Glossary

rail support **1**
crosspiece **2**
flat plate **3**
linear rail **4**
cylindrical head body **5**
web **6**
extensions **7**
bracket **8**
connector **9**
support block **10**
recess or opening **11**
support strip or support piece **12**
connection means **13**
door or door panel **14**
primary **15** of a linear motor
magnetic way **16** or magnetic track
recess **17**
bushing **18**
hole **19**
longitudinal opening **20**
upper hinge joint **21**
lower guiding joint **22**
magnets **23**
strip or back iron **24**
primary **25**
magnets **26**
strip or back iron **27**
primary **28**
shim **29**
connecting means **30**

## Claims

1. A door suspension system comprising:
at least one rail support **(1)** attachable to a door frame **(2)** above a doorway or entrance portal;
an elongated rail **(4)** mounted on said at least one rail support;
a pair of brackets **(8, 8')** comprising each a connector **(9, 9')** attached to respective supporting means **(10, 10')** having a recess or opening **(11),** in which the rail **(4)** or a part of it is introduced;
a support piece **(12)** attached to the connectors **9, 9'** and
provided with connection means **(13, 13')** from which a door or door panel **(14)** is suspended;
an elongated magnetic way **(16)** attached to the rail **(4)** or to the support piece **(12)** and a back-iron or a primary **(15)** of a linear motor attached to the support piece **(12)** or to the plate **(3),** respectively, and disposed in such a manner that the attraction force between the magnetic way **(16)** and
the back-iron or the primary **(15)** cancels at least partially the weight of the door or door panel **(14).**

2. The door suspension system according to claim **1,**
wherein said rail support **(1)** comprises an elongated rigid plate **(3),** to which both the rail **(4)** and the magnetic way **(16)** are attached;
wherein said connector **(9)** has a substantially C-profile embracing the rail **(4)** and the rigid plate **(3),** which is of a ferromagnetic material and substantially flat shaped, preferably having a horizontally disposed plain surface;
and wherein said back-iron or said primary is mounted on said support piece **(12')** in such manner that said attraction cancels at least partially the weight of the door or door panel **(14).**

3. The door suspension system according to claim **1,**
wherein said rail support **(1)** comprises an elongated rigid plate **(3),** to which both the rail **(4)** and said back-iron or said primary **(15)** are attached, and wherein said plate **(3)** is of a ferromagnetic material and substantially flat shaped, preferably having a horizontally disposed plain surface;
wherein said connector **(9)** has a substantially C-profile embracing the rail **(4)** and the primary;
and wherein said magnetic way **(16)** is mounted on said support piece **(12')** in such a manner that said attraction force cancels at least partially the weight of the door or door panel **(14).**

4. The door suspension system according to one of the claims **1** to **3,** further comprising a bearing **(18)** of substantially cylindrical shape with an axial hole **(19),**
wherein said bearing is mounted in said opening **(11)** of the supporting means **(10)** and wherein said rail **(4)** is introduced in said hole.

5. The door suspension system according to claim **2** or **4,**
wherein the magnetic way **(16)** is mounted at least partially under the plate **(3),** and wherein a primary **(15)** is mounted over the strip **(12)** and located in the space between the brackets **(8** and **8').**

6. The door suspension system according to claim **3** or **4,**
wherein the magnetic way **(16)** is mounted over the strip **(12, 12')** and the primary **(15)** under the plate **(3).**

7. The door suspension system according to one of the claims **1** to **6,** wherein the rail **(4)** comprises a substantially cylindrical head body **(5)** and a web **(6)** with extensions **(7)** attached to a plate **(3).**

8. The door suspension system according to one of the claims **4** to **7, characterized in that** said bearing **(18)** has a substantially cylindrical shape with an axial hole **(19)** and a longitudinal opening **(20)** and is mounted in said opening **(11)** of the supporting means **(10),** and wherein the head body **(5)** of said rail **(4)** is introduced in said hole **(19)** and said web **(6)** of said rail **(4)** is introduced in said opening (**20**).

9. The door suspension system according to claim **1,**
wherein the plate **(3)** is provided with recesses **(17)** for the location of magnets which constitute said magnetic way.

10. The door suspension system according to one of the claims **1** to **9, characterized in that** the magnetic way **(16)** comprises neodymium rare earth permanent magnets or ferrite permanent magnets and/or that the door suspension system is formed as a suspension of a door or door panel **(14)** for a lift installation.
